# FASCICULE DE BREVET EUROPEEN

(11) **EP 3 827 164 B1**
(45) Date de publication et mention de la délivrance du brevet: **18.01.2023**
(21) Numéro de dépôt: 19783089.6
(22) Date de dépôt: 19.08.2019
(51) Int. Cl.: F02C 7/18, F01D 25/24, F02K 3/105, F02C 9/18

(54) **EMBOUCHURE D'EJECTION D'UN GAZ CHAUD A TRAVERS UNE PAROI DE MOTEUR D'AERONEF**
AUSLASS ZUM AUSSTOSSEN EINES HEISSGASES DURCH EINE FLUGZEUGMOTORWAND
OUTLET FOR EJECTING A HOT GAS THROUGH AN AIRCRAFT ENGINE WALL

(30) Priorité: 30.08.2018 FR 1857822
(43) Date de publication de la demande: 02.06.2021
(73) Titulaire: SAFRAN AIRCRAFT ENGINES, 75015 Paris (FR); SAFRAN ELECTRONICS & DEFENSE, 92100 Boulogne Billancourt (FR)
(72) Inventeur: HADDAD, Christian, 77550 MOISSY-CRAMAYEL (FR); DE BARROS SOARES, Daniel, 77550 MOISSY-CRAMAYEL (FR); DUPIN, Claude Pierre Joannès, 92340 BOURG LA REINE (FR); VERDIER, Bastien Pierre, 77550 MOISSY-CRAMAYEL (FR)
(74) Mandataire: Brevalex
(86) Numéro de dépôt international: PCT/FR2019/051933
(87) Numéro de publication internationale: WO 2020/043977

(56) Documents cités:
- EP-A2- 1 728 992
- EP-A2- 2 275 655
- US-A- 5 269 135

## Description

L'invention a trait à une embouchure d'éjection d'un gaz chaud à travers une paroi de moteur d'aéronef.

Elle peut être employée à l'extrémité de conduits de gaz chaud de moteurs d'aéronef, qui appartiennent à des circuits d'échange de chaleur soutirant du gaz frais (généralement de l'air) d'une région relativement fraîche de l'aéronef, comme la veine secondaire quand elle existe ou les compresseurs de la veine principale, avant de lui faire subir un échauffement dans un échangeur de chaleur avec une portion plus chaude du moteur qu'il convient de rafraîchir, ou un autre fluide (huile de lubrification ou gaz par exemple). Le gaz devenu chaud est ensuite rejeté dans un milieu extérieur par une embouchure, qu'on appelle aussi une grille d'éjection, composée d'une ou de plusieurs ouvertures traversant une paroi de l'aéronef, comme un capot externe de nacelle ou un carter externe ou interne de stator.

Il arrive que le gaz chaud soit rejeté à une température supérieure à celle qui peut être tolérée sans dommage par le matériau de la paroi, que le gaz chaud lèche avant d'être dispersé et qui subit donc des dégradations aux alentours des ouvertures de la grille d'éjection.

Un exemple d'une telle embouchure, éventuellement soumise à cette difficulté, peut être trouvé dans le document FR 3 015 569 A.

On peut obvier à ce risque d'endommagement en imposant un décollement précoce du gaz chaud, afin de le maintenir à l'écart de la paroi à proximité de l'embouchure. On exploite l'écoulement d'un gaz plus frais qui circule normalement sur la face externe de la paroi pendant le fonctionnement du moteur en maintenant une couche protectrice. Le gaz chaud subit un mélange rapide avec le gaz frais, et devient inoffensif avant de pouvoir revenir à la paroi.

Cet effet peut être procuré par des pièces appelées cheminées, qui sont placées sur les ouvertures en faisant saillie hors de la paroi dans le milieu frais d'éjection, et relâchent donc le gaz chaud à distance de la paroi, sur laquelle est maintenue la couche protectrice de gaz frais ambiant pendant le vol.

Les cheminées peuvent être profilées de manière aérodynamique afin d'avoir une traînée réduite, mais qu'il n'est pas possible de supprimer complètement. Un inconvénient des cheminées saillantes est donc une diminution du rendement du moteur.

L'invention repose sur l'idée que la protection de la paroi de la nacelle n'est pas nécessaire pendant toute la durée du vol, mais seulement dans certaines situations particulières de celui-ci, quand le moteur tourne à plein régime, alors qu'elle ne l'est pas en mode de croisière, où le débit de gaz chaud est quasiment nul. On a donc eu l'idée de tenir compte de ces conditions différentes à des régimes de vol différents pour adapter la conception du dispositif d'éjection.

L'objectif de l'invention est de faire varier la hauteur de saillie des cheminées au-dessus de la paroi du moteur selon les circonstances et notamment le régime de vol, principalement pour réduire cette hauteur de saillie et la traînée correspondante dès qu'il est possible.

EP 2 275 655 A2 décrit une telle cheminée déployable dont la paroi est munie d'ouvertures pour assurer une surface d'exécution plus importante quand le débit à évacuer augmente. Le déploiement de la cheminée dépend d'une augmentation de la perte de charge nécessaire à la traverser, que produit l'augmentation du débit.

EP 1728 992 A2 décrit une soupape d'entrée d'un circuit de prélèvement de gaz circulant dans une veine, dont la hauteur d'élévation dans la veine est variable pour ouvrir plus ou moins la soupape.

Sous une forme générale, l'invention concerne un dispositif à embouchure selon les revendications.

Et le moyen de commande ne dépend pas d'une action extérieure, originaire d'un autre système ou imposée par un opérateur comme le pilote de l'aéronef, mais une commande automatique est au contraire appliquée. Il comprend un moyen moteur sensible à une température, pour déployer ou rétracter la cheminée en fonction de la température qui est mesurée ou ressentie.

L'invention peut s'appliquer à une embouchure à ouverture unique. Mais les dispositifs usuels comprennent une pluralité de telles ouvertures composant une grille d'éjection, dont chacune est pourvue d'une cheminée telle que mentionnée ci-dessus. Il est alors conforme à une réalisation préférée de l'invention que les dispositifs de commande de mouvements des cheminées soient indépendants les uns des autres, afin de limiter les conséquences d'un mauvais fonctionnement éventuel à une seule des ouvertures.

Selon un mode principalement envisagé, la cheminée est cylindrique, et le dispositif de commande est agencé pour lui imposer un mouvement de translation perpendiculaire à la paroi en coulissant dans l'ouverture : les dispositifs correspondants sont particulièrement simples à concevoir et construire.

Le terme « cylindrique » utilisé dans cette demande englobe toutes les formes de solide délimitées par une surface dont les génératrices sont parallèles et par deux surfaces d'extrémité. Ainsi, la cheminée cylindrique peut avoir une section circulaire, elliptique ou encore quelconque.

Selon un second mode de réalisation, la cheminée est à section rectangulaire.

Une prise de température peut être faite par un capteur tel qu'un thermocouple positionné en surface du capot de la nacelle, qui commande un circuit d'alimentation d'un moteur d'actionnement du dispositif de commande. Mais un dispositif sans moteur caractérisé serait aussi avantageux : il pourrait consister en un actionneur inerte du mouvement de la cheminée, apte à subir un changement d'état selon une température. Les températures mentionnées ci-dessus sont des températures représentatives de l'échauffement supposé de la paroi. Elles peuvent consister en la température de la paroi, notamment en aval de l'embouchure d'éjection du gaz chaud, ou la température du gaz dans le conduit.

Une sécurité peut être procurée par un moyen de rappel de la cheminée à une position complètement déployée, c'est-à-dire à hauteur de saillie maximale hors de la paroi, en cas d'inactivité ou de défaillance du dispositif de commande. Le moyen de rappel maintient alors la cheminée à l'état où elle protège au mieux la paroi en empêchant la retombée du gaz chaud sur elle.

Avantageusement, la cheminée peut présenter une position complètement rétractée sous la paroi, correspondant donc à une hauteur de saillie nulle, pour minimiser la traînée.

Enfin, il est avantageux encore, pour permettre une commande simplifiée, que le mouvement de la cheminée soit basculant entre deux positions stables, d'après des franchissements d'un seuil de température, c'est-à-dire que la cheminée soit complètement déployée, soit complètement rétractée, les états intermédiaires n'étant pas forcément intéressants.

Mais plus généralement, la hauteur de saillie de la cheminée pourra être déterminée par le régime de vol du moteur de l'aéronef; avec une hauteur élevée aux régimes élevés de décollage ou d'accélération par exemple, et petite ou nulle aux régimes faibles, de croisière par exemple.

Les différents aspects, caractéristiques et avantages de l'invention seront maintenus décrits plus en détail, au moyen des figures suivantes, qui en illustrent certains modes de réalisation donnés à titre purement illustratif :
- la figure 1 illustre la disparition d'une grille d'éjection sur un moteur d'aéronef ;
- la figure 2 schématise l'écoulement d'éjection ;
- la figure 3 représente les écoulements de gaz à la grille ;
- la figure 4 illustre l'effet de cheminées aux ouvertures de la grille ;
- les figures 5 et 6 illustrent une première réalisation de l'invention à deux états de fonctionnement ;
- la figure 7 représente un dispositif de commande du mouvement de la cheminée ;
- et les figures 8 et 9 illustrent une deuxième réalisation de l'invention à deux états de fonctionnement.

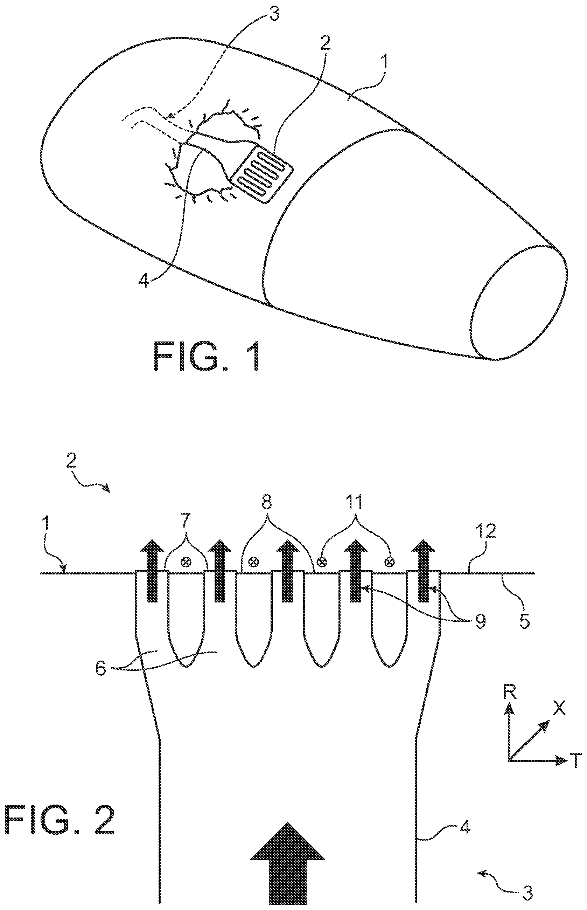

La figure 1 représente schématiquement un capot de nacelle enveloppant un moteur d'aéronef, dont la paroi 1 est munie d'une embouchure 2 par laquelle un circuit d'échange de chaleur 3 situé sous la paroi 1 débouche à l'extérieur d'elle, et éjecte un jet de gaz soutiré auparavant d'une autre partie du moteur et ayant participé à un échange de chaleur. On rappelle que l'invention n'est pas limitée à un emploi sur un capot de nacelle, mais qu'elle peut concerner aussi d'autres capots, comme ceux de carters externes ou internes de stators. De même, le circuit d'échange de chaleur 3 peut provenir de divers endroits du moteur, son trajet n'est pas non plus imposé et l'échange de chaleur permet de refroidir un autre fluide qui est également indifférent.

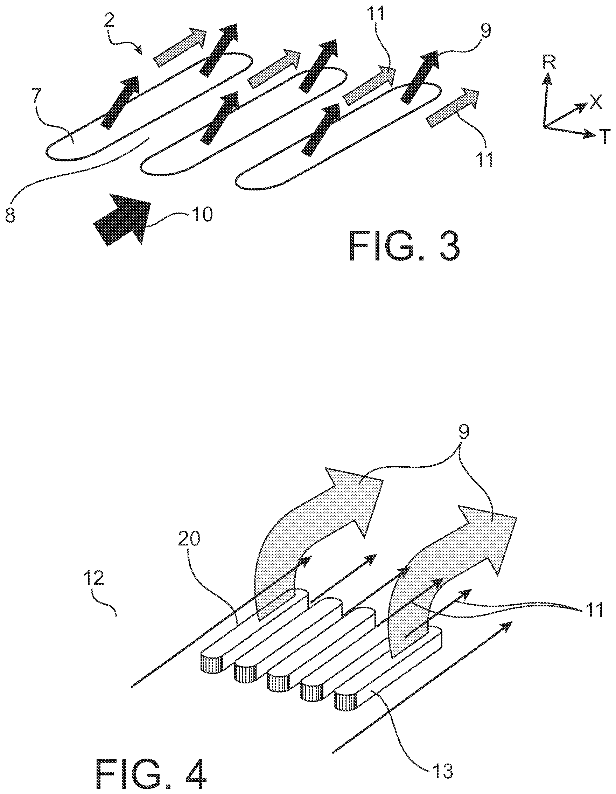

On se rapporte à la figure 2. Le circuit d'échange de chaleur 3 comporte à son extrémité aval un conduit 4 qui s'étend sous une face interne 5 de la paroi 1. En s'approchant de celle-ci, le conduit 4 se divise en branches 6, distinctes ici les unes des autres, puis parallèles et à section d'abord diminuant, puis uniforme, avant d'atteindre la paroi 1 et l'embouchure 2 ; et les branches 6 se raccordent à la paroi 1, et communiquent à l'extérieur de celle-ci, par autant d'ouvertures 7 de l'embouchure 2, qui traversent la paroi 1. Leur disposition est mieux visible à la figure 3. Les ouvertures 7 sont parallèles entre elles, se succèdent dans une direction transversale T (souvent la direction angulaire du moteur), et leur forme est oblongue, leur plus grande dimension étant dans une direction longitudinale ou d'allongement principal X, perpendiculaire à la précédente sur la paroi 1 (souvent la direction axiale du moteur). La longueur des ouvertures 7 dans la direction X peut être comprise entre 100 mm et 450 mm ; la largeur des ouvertures 7 dans la direction T peut être comprise entre 5 mm et 30 mm ; celle de la grille d'éjection formée par l'embouchure 2 entre 250 mm et 600 mm ; et la surface totale de l'embouchure 2 peut varier entre 0,01 m² et 0,25 m² environ. Il n'existe toutefois pas de véritable limite dimensionnelle à l'application de l'invention. Et les ouvertures 7 sont séparées par des lamelles 8 de la paroi 1 dont la largeur peut être comprise entre 0,5 fois et 3 fois la largeur des ouvertures 7, préférentiellement 1,0 fois.

Le gaz chaud, souvent de l'air, qui est éjecté par le circuit 3 est donc divisé en filets chauds 9 qui empruntent respectivement les branches 6. Leur direction peut être d'abord en direction de hauteur R (perpendiculaire aux deux précédentes X et L, et coïncidant souvent avec la direction radiale du moteur) en s'élevant au-dessous de la face externe 12, opposée à la face interne 5, de la paroi 1, avant de s'infléchir et de prendre une composante de mouvement dans la direction longitudinale X sous l'effet d'un écoulement 10 extérieur tangent à la paroi 1 (souvent dirigé vers l'aval du moteur) d'un gaz frais (souvent de l'air ambiant). Mais l'écoulement 10 se divise en filets frais 11, passant autour des ouvertures 7 et sur les lamelles 8, en passant sur l'embouchure 2, avec un débit important qui reste tangent à la paroi 1. Ce débit de gaz frais contrecarre le retour des filets chauds 9 sur la face externe 12 de la paroi 1 et la protège d'échauffements excessifs. De plus, la division des écoulements chauds et frais en filets entremêlés 9 et 11 favorise leur mélange plus rapide et donc la suppression des zones chaudes à l'extérieur de l'embouchure 2.

La figure 4 représente un aménagement possible d'une grille d'éjection à cheminée, dans lequel les ouvertures 7 et les branches 6 du circuit sont prolongées par des cheminées 13 saillant sur la face externe 12 de la paroi 1. La hauteur des cheminées 13 peut être typiquement de quelques millimètres ou quelques centimètres avec cette disposition. Les filets chauds 9 sortent du circuit d'échange de chaleur 3 à distance de la paroi 1 par un bord supérieur 20 des cheminées 13, ce qui favorise le maintien des filets d'air frais entre les ouvertures 7.

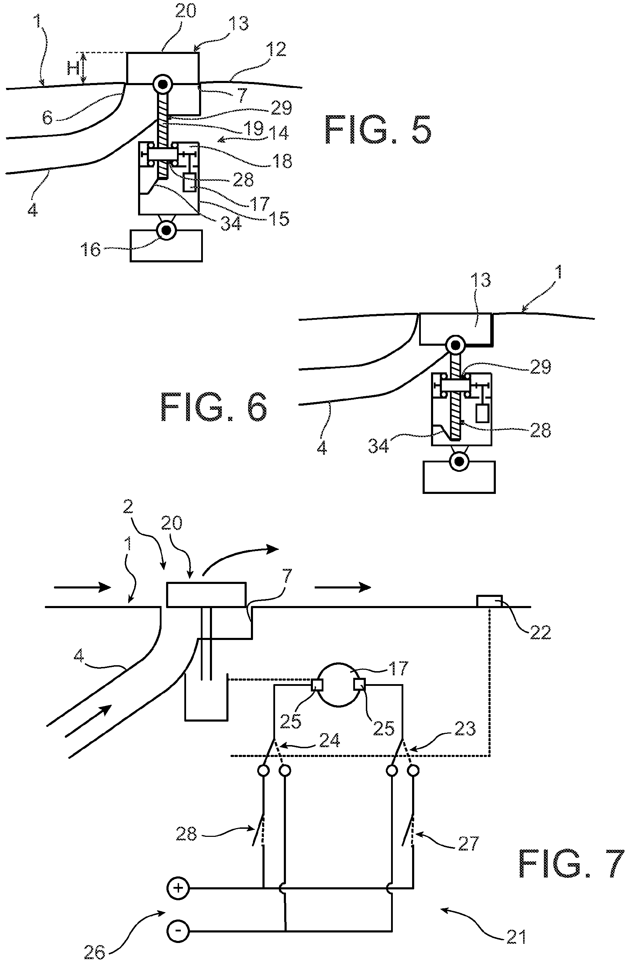

La description porte maintenant sur les figures 5 et 6. Les cheminées 13 ne sont pas fixées à la structure du moteur et en particulier à la paroi 1, mais au contraire sont détachées d'elle, et chacune consiste en un manchon de forme cylindrique, c'est-à-dire avec une section constante, identique à celle de l'ouverture 7 à un petit jeu près, engagé à travers l'ouverture 7. Leur section peut être rectangulaire, avec notamment deux côtés longs rectilignes et parallèles dans la direction axiale X comme la figure 3 le représente, et deux côtés courts arrondis. Leur paroi est continue, dépourvue d'ouverture. Elles sont de plus mobiles. Leur mouvement est avantageusement coulissant et accompli par un dispositif de commande 14 comprenant, dans un boîtier 15 articulé à un point fixe 16 de la structure du moteur d'aéronef, un moteur électrique 17, des engrenages 18 de transmission du mouvement, et une vis sans fin 19 engrenant avec la transmission 18, perpendiculaire à la paroi 1 et articulée à la cheminée 13.

Le dispositif de commande 14 impose à la cheminée 13 un mouvement de translation dans la direction de la vis sans fin 19 qui a pour effet de la faire coulisser dans la branche 6 en faisant varier sa hauteur de saillie H au-dessus de la face externe 12 entre une valeur maximale, correspondant à une position complètement déployée représentée à la figure 5, et une valeur minimale dans laquelle la hauteur de saillie peut d'ailleurs être nulle, c'est-à-dire que la cheminée 13 est alors complètement rétractée dans la branche 6 et la face externe 12 est lisse (figure 6). La première position est utilisée lorsque la paroi 1 subit de très fortes températures lors de l'éjection de gaz très chaud, alors que la seconde position l'est dans les autres circonstances, quand les besoins de rafraîchissement du moteur d'aéronef sont moindres et que le débit de gaz chaud est moins important, ou que le gaz est à une température moindre. La section d'ouverture de la cheminée 13 est identique dans les deux états, devant suffire à évacuer tous les débits prévisibles de gaz sans opposer de perte de charge importante.

Le dispositif de commande 14 peut être commandé par les moyens représentés à la figure 7, comprenant un circuit électrique 21 ou un thermocouple 22, qui est un capteur de température positionné (par exemple) sur la face externe 12 de la paroi 1 en aval des ouvertures 7 de l'embouchure 2 , commande deux commutateurs 23 et 24 aptes à placer les bornes 25 du moteur électrique 17 à l'un ou l'autre des pôles positif ou négatif d'une différence de potentiel constante 26. Le circuit électrique 21 permet donc de faire tourner le moteur électrique 17 dans un sens ou dans l'autre. La commutation est faite quand le thermocouple 22 détecte qu'une température de la paroi 1 devient supérieure ou inférieure à une valeur de seuil.

Le circuit électrique 21 est complété par des contacts de fin de course 27 et 28 établis aux bornes du moteur 17 et qui ouvrent le circuit électrique 21 pour arrêter le mouvement quand une limite est atteinte. On obtient alors un dispositif purement passif en ce qu'il n'impose aucune commande extérieure, mais qui est simple et fiable. Et ce dispositif est bistable entre la position complètement déployée et la position complètement rétractée, ce qui est satisfaisant car les déploiements intermédiaires sont peu intéressants dans cette application, et permet de sauvegarder la robustesse du dispositif.

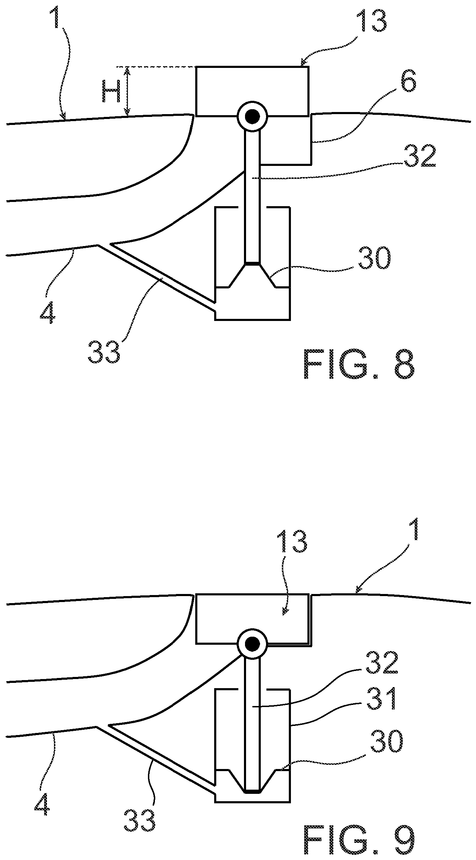

Un autre dispositif de commande 29, possédant certaines propriétés analogues mais de constitution encore plus simple, est décrit au moyen des figures 8 et 9. Il comprend une structure déformable 30 montée à une structure fixe 31 du moteur, et porteuse d'une tige 32 lisse remplaçant la vis sans fin 19 et porteuse de la cheminée 13. La structure déformable 30 est bistable entre deux états où elle a des formes différentes, en imposant donc deux positions de déploiement différentes à la cheminée 13 comme précédemment. La structure déformable 30 peut être construite en bilame de thermostat en un alliage à mémoire de forme. Le basculement d'un état à un autre peut être commandé (par exemple) par la température du gaz chaud, la structure déformable 30 étant exposée à ce gaz par un conduit de communication 33 donnant dans le conduit 4.

On a constaté un gain significatif de consommation de carburant par les moteurs équipés de l'invention, grâce à la possibilité de rétracter les cheminées 13 dans la plupart des régimes de vol, malgré l'augmentation de poids imposée par les dispositifs de commande 14. La fiabilité de ces derniers est bonne grâce à leur robustesse. Il est par ailleurs possible, dans certaines conceptions, d'ajouter un dispositif de rappel (34 aux figures 5 et 6) se présentant sous la forme d'un ressort qui tend à déplacer la cheminée 13 vers sa position complètement déployée, qui est donc une position de sûreté empêchant en toute circonstance les détériorations de la paroi 1. La force du ressort 34 peut toutefois être vaincue par le moteur 17, de sorte que le fonctionnement du dispositif n'est pas entravé et que la position complètement déployée est forcée seulement en cas d'avarie ou d'inactivité quelconque du dispositif de commande (panne du moteur ou détérioration de la transmission 18 par exemple). Il faut alors que la liaison entre la transmission 18 et la vis sans fin 19 soit cinématiquement réversible.

Dans le cas usuel d'une pluralité d'ouvertures 7, chacune est avantageusement commandée par un dispositif indépendant semblable à ceux qu'on a décrits, de façon qu'une défaillance de l'un d'eux reste localisée à l'ouverture 7 correspondante.

D'une façon générale, les moyens déclencheurs du déploiement et du repli de la cheminée, qui sont sensibles à des franchissements de certains seuils de température, peuvent être soit des capteurs qui mesurent une température et envoient la mesure à un dispositif de commande, soit les actionneurs de la cheminée eux-mêmes, qui sont construits pour changer d'état en fonction de la température.

## Revendications

1. Agencement d'embouchure (2) d'éjection d'un gaz chaud, comprenant : une paroi (1) de moteur d'aéronef exposée à un écoulement de gaz frais tangent à ladite paroi (1) à une face extérieure de celle-ci, comprenant au moins une ouverture (7) à travers la paroi ; un conduit d'acheminement (4, 6) du gaz chaud s'étendant sous une face interne de la paroi (1) et menant à l'ouverture (7) ; et une cheminée (13) associée à l'ouverture et en forme de manchon saillant hors de la paroi (1), le manchon étant formé d'une paroi de manchon continue mais étant ouvert à un bord supérieur (20) au-dessus de la paroi, la cheminée étant détachée de la paroi, engagée de manière mobile à travers l'ouverture (7), et pourvue d'un dispositif de commande (14; 30) de mouvement faisant varier une hauteur de saillie (H) de la cheminée hors de la paroi ; **caractérisé en ce que** le dispositif de commande comprend un moyen moteur (17, 22 ; 30) sensible à une température, à l'exclusion de toute commande volontaire.

2. Agencement d'embouchure d'éjection selon la revendication 1, **caractérisé en ce que** le dispositif de commande comprend un capteur (22) de ladite température, et un moteur électrique (17) commandé par le capteur.

3. Agencement d'embouchure d'éjection selon la revendication 1, **caractérisé en ce que** le moyen moteur comprend un actionneur (30) inerte changeant d'état selon une température.

4. Agencement d'embouchure d'éjection selon l'une quelconque des revendications 1 à 3, **caractérisé en ce que** la température est soit une température de la paroi (1) en aval de l'ouverture (7), soit une température du gaz chaud dans le conduit (4).

5. Agencement d'embouchure d'éjection selon l'une quelconque des revendications 1 à 4, **caractérisé en ce qu'**elle comprend un moyen de rappel (34) de la cheminée (13) à une position complètement déployée à hauteur de saillie maximale hors de la paroi, en cas d'inactivité ou de défaillance du dispositif de commande.

6. Agencement d'embouchure d'éjection selon l'une quelconque des revendications 1 à 5, **caractérisé en ce que** le mouvement est basculant entre deux positions stables de la cheminée, d'après des franchissements d'un seuil de température de la paroi (1) ou du gaz chaud dans le conduit (4).

7. Agencement d'embouchure d'éjection selon l'une quelconque des revendications 1 à 6, **caractérisé en ce que** la cheminée a une paroi continue, dépourvue d'ouvertures.

8. Agencement d'embouchure d'éjection selon l'une quelconque des revendications 1 à 7, **caractérisé en ce que** la cheminée (13) est cylindrique, et le dispositif de commande est agencé pour lui imposer un mouvement de translation perpendiculaire à la paroi (1) en coulissant dans l'ouverture.

9. Agencement d'embouchure d'éjection selon l'une quelconque des revendications 1 à 8, **caractérisé en ce que** la cheminée est mobile avec une position complètement rétractée sous la paroi, à hauteur de saillie (H) nulle.

10. Agencement d'embouchure d'éjection selon l'une quelconque des revendications 1 à 9, comprenant une pluralité de dites ouvertures (7) pourvues chacune d'une dite cheminée (13) et réparties sur la paroi (1), **caractérisé en ce que** les dispositifs de commande de mouvement des cheminées sont indépendants les uns des autres.

11. Agencement d'embouchure d'éjection selon l'une quelconque des revendications 1 à 10, **caractérisé en ce que** la hauteur de saillie varie en fonction du régime de vol de l'aéronef.

## Patentansprüche

1. Anordnung eines Auslasses (2) zum Ausstoßen eines Heißgases, mit: einer Wand (1) eines Flugzeugmotors, die einem Frischgasstrom ausgesetzt ist, der tangential zu dieser Wand (1) an einer Außenseite derselben verläuft, mit mindestens einer Öffnung (7) durch die Wand hindurch; einer Förderleitung (4, 6) des Heißgases, die unter einer Innenfläche der Wand (1) verläuft und zu der Öffnung (7) führt; sowie einem Schacht (13), der der Öffnung zugeordnet ist und in Form eines Stutzens aus der Wand (1) hervorsteht, wobei der Stutzen aus einer durchgehenden Wand des Stutzens besteht, aber an einem oberen Rand (20) über der Wand geöffnet ist, wobei der Schacht von der Wand gelöst ist, beweglich durch die Öffnung (7) hindurch in Eingriff gebracht wird und mit einer Bewegungssteuerungsvorrichtung (14; 30) versehen ist, durch die eine Höhe des Vorsprungs (H) des Schachts aus der Wand variiert werden kann; **dadurch gekennzeichnet, dass** die Steuerungsvorrichtung ein temperaturempfindliches Antriebsmittel unter Ausschluss jeglicher freiwilliger Steuerung aufweist.

2. Anordnung eines Auslasses zum Ausstoßen nach Anspruch 1, **dadurch gekennzeichnet, dass** die Steuerungsvorrichtung einen Sensor (22) für die Temperatur sowie einen durch den Sensor gesteuerten Elektromotor (17) aufweist.

3. Anordnung eines Auslasses zum Ausstoßen nach Anspruch 1, **dadurch gekennzeichnet, dass** das Antriebsmittel einen Trägheitsaktuator (30) aufweist, der temperaturabhängig den Zustand ändert.

4. Anordnung eines Auslasses zum Ausstoßen nach einem der Ansprüche 1 bis 3, **dadurch gekennzeichnet, dass** die Temperatur entweder eine Temperatur der Wand (1) stromabwärts der Öffnung (7) oder eine Temperatur des Heißgases in der Leitung (4) ist.

5. Anordnung eines Auslasses zum Ausstoßen nach einem der Ansprüche 1 bis 4, **dadurch gekennzeichnet, dass** er ein Mittel zum Vorspannen (34) des Schachts (13) in eine vollständig ausgefahrene Stellung auf der Höhe des maximalen Vorsprungs aus der Wand im Falle einer Inaktivität oder eines Ausfalls der Steuerungsvorrichtung umfasst.

6. Anordnung eines Auslasses zum Ausstoßen nach einem der Ansprüche 1 bis 5, **dadurch gekennzeichnet, dass** eine Kippbewegung zwischen zwei stabilen Positionen des Schachts nach Überschreitungen eines Grenzwerts der Temperatur der Wand (1) oder des Heißgases in der Leitung (4) stattfindet.

7. Anordnung eines Auslasses zum Ausstoßen nach einem der Ansprüche 1 bis 6, **dadurch gekennzeichnet, dass** der Schacht eine durchgehende Wand hat, die mit Öffnungen versehen ist.

8. Anordnung eines Auslasses zum Ausstoßen nach einem der Ansprüche 1 bis 7, **dadurch gekennzeichnet, dass** der Schacht (13) zylinderförmig ist und die Steuerungsvorrichtung so angeordnet ist, dass sie ihm eine Translationsbewegung senkrecht zur Wand (1) aufzwingt, während er in die Öffnung gleitet.

9. Anordnung eines Auslasses zum Ausstoßen nach einem der Ansprüche 1 bis 8, **dadurch gekennzeichnet, dass** der Schacht bei einer vollständig unter die Wand (1) zurückgezogenen Position auf der Höhe eines Nullvorsprungs (H) beweglich ist.

10. Anordnung eines Auslasses zum Ausstoßen nach einem der Ansprüche 1 bis 9, mit einer Mehrzahl der Öffnungen (7), die jeweils mit einem derartigen Schacht (13) versehen und über die Wand (1) verteilt sind, **dadurch gekennzeichnet, dass** die Steuerungsvorrichtungen zur Bewegung der Schächte voneinander unabhängig sind.

11. Anordnung eines Auslasses zum Ausstoßen nach einem der Ansprüche 1 bis 10, **dadurch gekennzeichnet, dass** die Höhe des Vorsprungs in Abhängigkeit des Flugbetriebs des Flugzeugs variiert.

## Claims

1. An outlet arrangement (2) for ejecting a hot gas, comprising an aircraft engine wall (1) exposed to a cool gas flow tangent to said wall (1) on an outside face of said wall (1), comprising at least one opening (7) through said wall (1), a duct (4, 6) for conveying the hot gas extending under an intern face of said wall (1) and leading to the opening (7), and a stack (13) associated with the opening and in the shape of a sleeve projecting out of the wall (1), where the sleeve is formed of a continuous sleeve wall opened on a top edge (20) over said sleeve wall, said stack being detached from the wall, movably engaged through the opening (7), and provided with a movement control device (14; 30) varying a height (H) of the projection of the stack out of the wall, **characterised in that** the control device comprises a motor means (17, 22; 30) sensitive to a temperature, to the exclusion of any voluntary control.

2. The ejection outlet arrangement according to claim 1, **characterised in that** the control device comprises a sensor (22) of said temperature, and an electric motor (17) controlled by the sensor.

3. The ejection outlet arrangement according to claim 1, **characterised in that** the motor means comprises an inert actuator (30) changing state according to a temperature.

4. The ejection outlet arrangement according to any one of claims 1 to 3, **characterised in that** the temperature is either a temperature of the wall (1) downstream of the opening (7), or a temperature of the hot gas in the duct (4).

5. The ejection outlet arrangement according to any one of claims 1 to 4, **characterised in that** it comprises a means (34) for returning the stack (13) to a fully deployed position at maximum height of projection out of the wall, in case of inactivity or failure of the control device.

6. The ejection outlet arrangement according to any one of claims 1 to 5, **characterised in that** the movement is tilting between two stable positions of the stack, according to the crossing of a temperature threshold of the wall (1) or of the hot gas in the duct (4).

7. The ejection outlet arrangement according to any one of claims 1 to 6, **characterised in that** the stack has a continuous wall, devoid of openings.

8. The ejection outlet arrangement according to any one of claims 1 to 7, **characterised in that** the stack (13) is cylindrical, and the control device is arranged to impose thereto a translational movement perpendicular to the wall (1) by sliding in the opening.

9. The ejection outlet arrangement according to any one of claims 1 to 8, **characterised in that** the stack is movable with a fully retracted position under the wall, at zero projection height (H).

10. The ejection outlet arrangement according to any one of claims 1 to 9, comprising a plurality of said openings (7) each provided with a said stack (13) and distributed over the wall (1), **characterised in that** the stack movement control devices are independent of each other.

11. The ejection outlet arrangement according to any one of claims 1 to 10, **characterised in that** the height of the projection varies depending on the speed of flight of the aircraft.
